# EUROPEAN PATENT SPECIFICATION

(11) **EP 0 521 654 B1**
(45) Date of publication and mention of the grant of the patent: **05.11.1997**
(21) Application number: 92305850.7
(22) Date of filing: 25.06.1992
(51) Int. Cl.: G11B 23/00

(54) **Disc for recording information signals**
Platte zur Aufzeichnung von Informationssignalen
Disque d'enregistrement de signaux d'information

(30) Priority: 29.06.1991 JP 185132/91; 14.02.1992 JP 59615/92; 14.02.1992 JP 59616/92
(43) Date of publication of application: 07.01.1993
(73) Proprietor: SONY CORPORATION, Tokyo (JP)
(72) Inventor: Takahashi, Kenji Patents Division, Shinagawa-ku, Tokyo 141 (JP); Chiba, Sachiya Patents Division, Shinagawa-ku, Tokyo 141 (JP); Kobayashi, Daiki Patents Division, Shinagawa-ku, Tokyo 141 (JP)
(74) Representative: Purvis, William Michael Cameron

(56) References cited:
- EP-A- 0 233 644
- EP-A- 0 314 010
- DE-A- 2 624 375
- US-A- 4 787 009
- PATENT ABSTRACTS OF JAPAN vol. 12, no. 388 (P-771)(3235) 17 October 1988

## Description

The invention relates to a disc for recording information signals, such as an optical disc or a magneto-optical disc.

Discs have hitherto been proposed to record information signals such as a write-once type optical disc or a magneto-optical disc.

Such discs may be of extremely small diameter and can permit high density recording of information signals. For example, a magneto-optical disc may have a diameter as small as 64 mm or even less.

Such a magneto-optical disc which is of a small diameter and permits of high density recording can be loaded into a disc rotating and driving device and rotationally driven at a higher velocity. Whilst the disc is rotationally driven at high velocity, a light beam can be radiated, for an optical disc, onto fine recording tracks provided in a signal recording layer on a surface of the magneto-optical disc or an external magnetic field can be impressed by a magnetic head onto the other surface of the magneto-optical disc to record desired information signals.

For radiating the light beam on the fine recording tracks, the magneto-optical disc, rotationally driven at an elevated velocity, needs to be retained integrally with a disc table of a disc rotating and driving device as well as being loaded with its centre of rotation aligned very accurately with the axis of the disc table.

For accurately positioning and loading a magneto-optical disc on a disc table, a disc loading system is proposed in, for example, Patent Specifications US-A-4 926 410, US-A-4 829 510 and US-A-4 787 009, in which a magnetic plate, such as a magnetic metal plate, provided on the magneto-optical disc, is attracted by a magnet provided on the disc table to chuck the magneto-optical disc on the disc table.

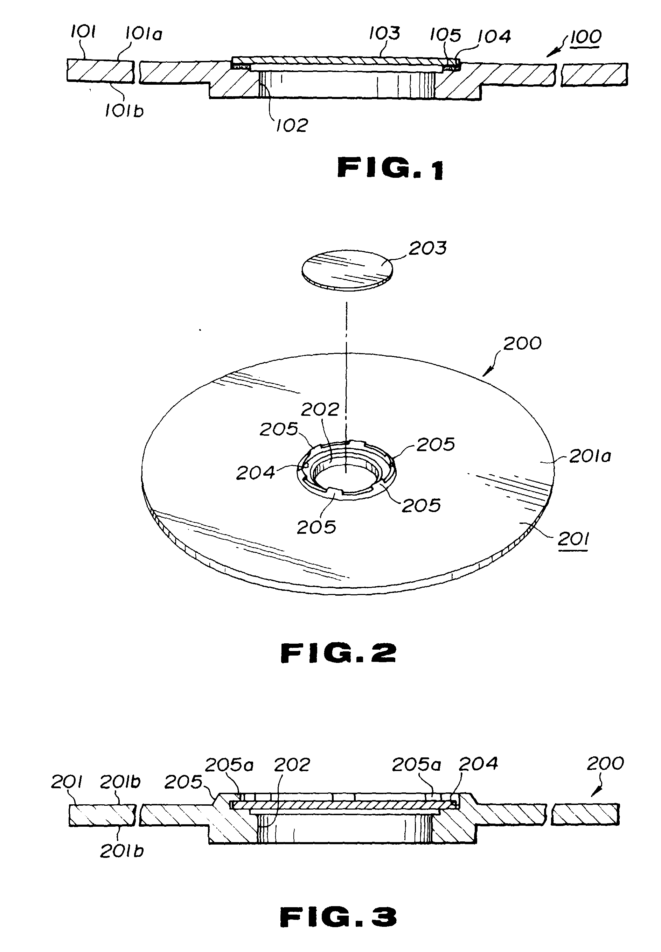

Referring to Figure 1 of the accompanying drawings, a magneto-optical disc 100, employed in a disc chucking system which uses the force of attraction of a magnet, includes a disc substrate 101 moulded from a transparent synthetic material, such as polycarbonate resin, into the shape of a disc. A recording layer for information signals is deposited by vapour deposition or sputtering on one major surface 101a of the disc substrate 101. The other major surface 101b of the disc substrate 101, opposite to said one major surface 101a on which the recording layer is deposited, is a write/read surface for information signals, and a light beam is radiated onto the major surface 101b on the signal recording layer to record/reproduce information signals.

The disc substrate 101 is formed with a central hole 102, as shown in Figure 1, in which can be engaged a centreing member provided on the disc rotating and driving device. A magnetic metal plate 103 is provided at the centre of said one major surface 101a of the disc substrate 101 to close the central hole 102. The metallic plate 103 is mounted in a recess 104 provided in said one major surface 101a of the disc substrate 101 encircling the central hole 102, and is secured therein with the aid of double-sided adhesive tape or an adhesive 105.

With a magneto-optical disc 100 in which the metal plate 103 is mounted on the disc substrate 101 with the aid of the adhesive 105, there is a risk that the metal plate 103 will become detached from the disc substrate 101 on repeated loading and unloading operations on or from the disc table of the disc rotating and driving device. That is, the force of magnetic attraction between the metal plate 103 and the magnet of the disc table at the time of loading and unloading with respect to the disc table acts as a load and is applied to the bonding area of the metal plate 103 to the disc substrate 101 and deteriorates the adhesive power of the adhesive 105.

To overcome the disadvantages inherent in mounting the metal plate by means of an adhesive, the applicants have proposed a magneto-optical disc in which the metal plate is mounted on the disc substrate without employing adhesive.

Referring to Figures 2 and 3, a magneto-optical disc 200 includes a disc substrate 201 formed of a transparent synthetic resin, such as a polycarbonate resin, and a recess 204 in one major surface 201a of the disc substrate 201 on which a recording layer for recording information signals is deposited. The recess 204 is formed around a central hole 202 and can receive a metal plate 203 therein. A plurality of caulking projections 205 are formed at equiangular intervals on the circumference of the recess 204 to caulk the metal plate 203.

After the metal plate 203 is housed within the recess 204, heat or ultrasonic waves are impressed on the projections 205 to caulk the projections 205 towards the recess 204 as shown in Figure 3 to support the metal plate 203 within the recess 204 by distal ends 205a of the caulked projections 205 thereby to mount the metal plate on the disc substrate 201.

In the magneto-optical disc 200 in which the metal plate 203 is supported and attached by the distal ends 205a of the projections 205 formed as one with the disc substrate 201, the metal plate 203 is fixedly supported by the disc substrate 201 so that the metal plate 203 remains attached to the disc substrate 201 even after repeated loading and unloading operations onto and from the disc table of the disc rotating and driving device.

However, to form the disc substrate 201 with projections 205 to support the metal plate 203, a metal mould used for moulding the disc substrate 201 becomes complex in structure and renders the manufacture of the metal mould difficult.

Also if the projections 205 are formed intermittently on the circumference of the recess 204, the molten synthetic resin becomes non-uniform in flow in those areas of the mould cavity which later form the projections 205. In addition, the molten synthetic resin tends to be cured with time lag and produces a so-called weld line which renders it impossible to produce a uniformly cured disc substrate 201. Unless cured uniformly, the disc substrate 201 has reduced optical properties due to residual inner stresses in the disc substrate 201. Above all, these residual inner stresses tend to produce double refraction in the disc substrate 201 to deteriorate information signal recording/reproducing characteristics when the disc substrate is used as a component of the magneto-optical disc 200.

To overcome the disadvantages derived from intermittent projections to support the metal plate, it may be contemplated to provide a continuous annular projection on the circumference of the recess which accommodates the metal plate. However, this solution can hardly be realized because of difficulties which are encountered in uniformly caulking such a continuous annular projection.

Although the continuous annular projection may be caulked only partially, the portion of the projection which has not been caulked will remain in a projected state after having the metal plate supported with respect to the disc substrate. The result is that the disc substrate is increased in thickness by the residual portion of the projection so that a magneto-optical disc prepared using this disc substrate has increased thickness. Also there are difficulties in designing a disc cartridge accommodating such a magneto-optical disc because the disc cartridge needs to be of a constant thickness in order to be used interchangeably.

According to one aspect of the invention there is provided an optical disc comprising
a disc substrate having a central hole and a recess in a first major surface thereof, the recess having a rim and having its centre substantially coaxial with the centre of the central hole; and
a magnetic member engaged in the recess in the disc substrate,
characterised in that one or more lugs protrude from said first major surface of the disc substrate into the recess and overlie a part of the magnetic member, the or each of said lugs being formed by thermal deformation of a part of the rim of the recess.

According to another aspect of the invention there is provided a method of holding a magnetic member to a disc substrate exhibiting light transmitting properties and having a central hole and a recess in one major surface thereof, the recess having a rim and having it's centre substantially coaxial with the centre of said central hole, characterised by engaging the magnetic member in the recess of the disc substrate, and
applying, with the magnetic member engaged in the recess, ultrasonic vibrations to parts of the rim of the recess of the disc substrate by ultrasonic wave generating means, while the ultrasonic wave generating means is pressed against the disc substrate, thereby thermally to deform the parts of the rim of the recess of the disc substrate to hold the magnetic member to the disc substrate.

A metal mould used for moulding such a disc substrate may be prepared easily to permit facilitated preparation of the disc substrate.

Deteriorated optical properties can be avoided and the disc can be free from double refraction or like defects.

The invention is diagrammatically illustrated by way of example in the accompanying drawings, in which:
Figure 1 is a cross-sectional view of a conventional magneto-optical disc;
Figure 2 is an exploded perspective view showing another magneto-optical disc of previously proposed kind;
Figure 3 is a cross-sectional view corresponding to Figure 2;
Figure 4 is an exploded perspective view showing a magneto-optical disc according to a first embodiment of the invention;
Figure 5 is a cross-sectional view showing a disc substrate and a metal plate of the magneto-optical disc shown in Figure 4;
Figure 6 is a cross-sectional view showing the metal plate accommodated in a recess formed in the disc substrate shown in Figure 4;
Figure 7 is a cross-sectional view showing the metal plate attached to the disc substrate shown in Figure 4;
Figure 8 is a plan view corresponding to Figure 7;
Figure 9 is a schematic side view corresponding to Figure 7 showing attachment of the metal plate to the disc substrate using a swaging method;
Figure 10 is an exploded perspective view of a magneto-optical disc according to a second embodiment of the invention;
Figure 11 is a cross-sectional view showing a disc substrate and a metal plate of the magneto-optical disc shown in Figure 10;
Figure 12 is a schematic cross-sectional view showing a disc supporting table employed in a first embodiment of a method according to the invention;
Figure 13 is a cross-sectional view showing a disc substrate attached to the disc supporting table shown in Figure 12;
Figure 14 is a cross-sectional view showing a metal plate accommodated in a recess formed in a disc substrate by a method according to the second embodiment of the invention;
Figure 15 is a cross-sectional view corresponding to Figure 14 showing a vibrator of an ultrasonic application device in contact with the rim of a recess of a disc substrate to accommodate a magnetic plate;
Figure 16 is a cross-sectional view corresponding to Figure 14 showing a projection being formed on the rim of the recess in the disc substrate to accommodate the magnetic plate by application of ultrasonic vibrations;
Figure 17 is a cross-sectional view corresponding to Figure 14 showing the magnetic metal plate attached to the disc substrate;
Figure 18 is a plan view corresponding to Figure 17;
Figure 19 is a cross-sectional view showing a disc substrate loaded on a disc supporting table employed in a second embodiment of a method according to the invention;
Figure 20 is a cross-sectional view corresponding to Figure 19 showing a metal plate accommodated in a recess in the disc substrate;
Figure 21 is a cross-sectional view corresponding to Figure 19 showing a vibrator of an ultrasonic application device in contact with a rim of the recess in the disc substrate;
Figure 22 is a cross-sectional view corresponding to Figure 19 showing a projection formed on the rim of the recess in the disc substrate by application of ultrasonic vibrations;
Figure 23 is a cross-sectional view corresponding to Figure 22 showing the magnetic metal plate attached to the disc substrate; and
Figure 24 is a plan view corresponding to Figure 23.

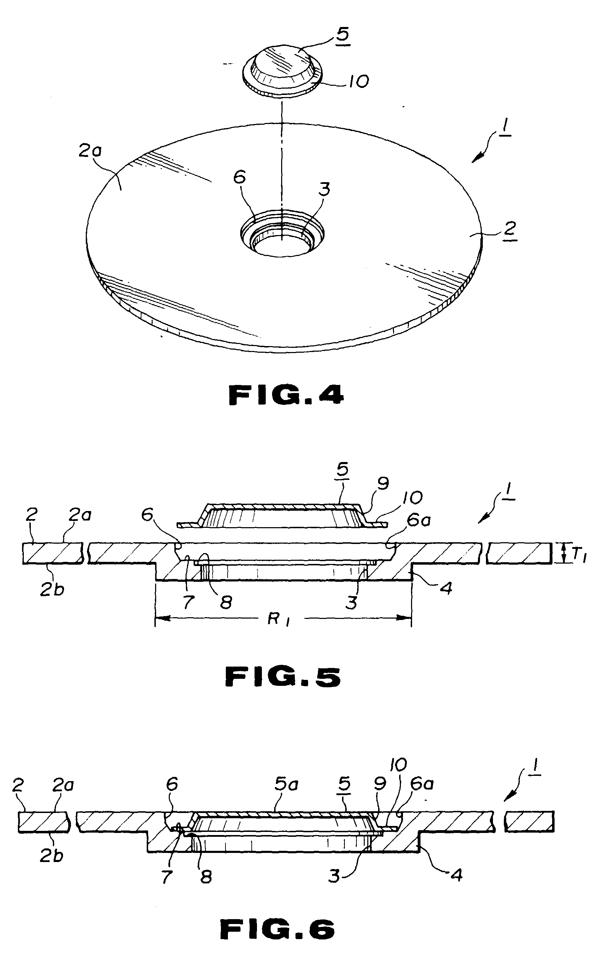

Referring to Figures 4, 5 and 6, a magneto-optical disc 1 includes a disc substrate 2 formed of a synthetic resin, such as polycarbonate resin, in the shape of a disc. A signal recording layer for recording information signals is deposited on one major surface 2a of the disc substrate 2. The other major surface 2b of the disc substrate 2 opposite to said one major surface 2a provided with the deposited signal recording layer is a signal write/readout surface, and information signals may be recorded or reproduced by radiating a light beam on the signal recording layer from the side of the write/readout surface.

The disc substrate 2 is of a thickness T₁ of about 1.2 mm and is formed with a central hole 3 to be engaged by a centreing member provided centrally of a disc table of a rotating driving device provided within recording/reproducing apparatus. The central hole 3 extends through the disc substrate 2 with its centre coincident with the centre of curvature of a recording track(s) formed concentrically or spirally on the signal recording layer.

As shown in Figure 5, an annular protuberance 4 is formed integrally at the centre of the major surface 2b of the disc substrate 2 and encircles the central hole 3. The function of the protuberance 4 is to increase the depth of the centre hole 3 in the thin disc substrate 2 to increase an amount of projection of the centreing member provided on the disc table with respect to the central hole 3 to ensure positive centreing operation of loading the magneto-optical disc 1 with the centre of rotation of the magneto-optical disc 1 coincident with the axis of the disc table.

The protuberance 4 is formed in at least a non-recording region towards the radially inner side of the disc substrate 2 free of the signal recording layer, and has an amount of axial projection substantially equal to the thickness T of the disc substrate 2. Thus the portion of the disc substrate 2 provided with the protuberance 4 has a thickness twice that of the main substrate body.

An annular recess 6 to accommodate a magnetic metal plate 5 is formed around the central hole 3 on the major surface 2a of the disc substrate 2. The recess 6 has a diameter less than the outer diameter R₁ of the protuberance 4 and a depth substantially equal to the thickness T of the disc substrate 2. The recess 6 has a diameter at an open end 6a which is larger than at a bottom end to facilitate insertion of the metal plate 5 into the recess 6.

The bottom end of the recess 6, operating as a setting surface 7 for the metal plate 5, is formed with a step 8. The function of the step 8 is to prevent burrs or like projections from being formed on the setting surface 7 for the metal plate 5 and to maintain planarity of the setting surface 7.

The metal plate 5, accommodated in the recess 6, is formed by punching a metal sheet, such as a stainless steel sheet, for example SUS-430, having a thickness of about 0.4 mm, into the shape of a disc.

The metal plate 5 has the shape of a disc of a size that can be accommodated in the recess 6. The metal plate 5 has its outer peripheral part bent so that the outer surface of a major middle part 5a is flush with the major surface 2a of the disc substrate 2 and an inner peripheral wall of the open end 6a of the recess 6 is faced by the rim of the metal plate 5, as shown in Figure 6. That is, an outer part of the metal plate 5 is formed as a rim flange 10 which lies on the setting surface 7, which outer rim flange is joined to the central major middle part 5a by means of a frusto-conical bent part 9. Thus the metal plate 5 is in the shape of a circular saucer, as shown in Figure 4.

The rim part of the recess 6 is then thermally deformed at a plurality of positions, such as at four positions, to form projections 11 projecting into the interior of the recess 6. The projections 11 are formed by crushing and deforming part of the rim of the recess 6 so that the deformed portions project into the inside of the recess 6. Therefore, no projections are formed on the major surface 2a of the disc substrate 2, and indeed recesses 12 are formed in the major surface 2a as a result of formation of the projections 11.

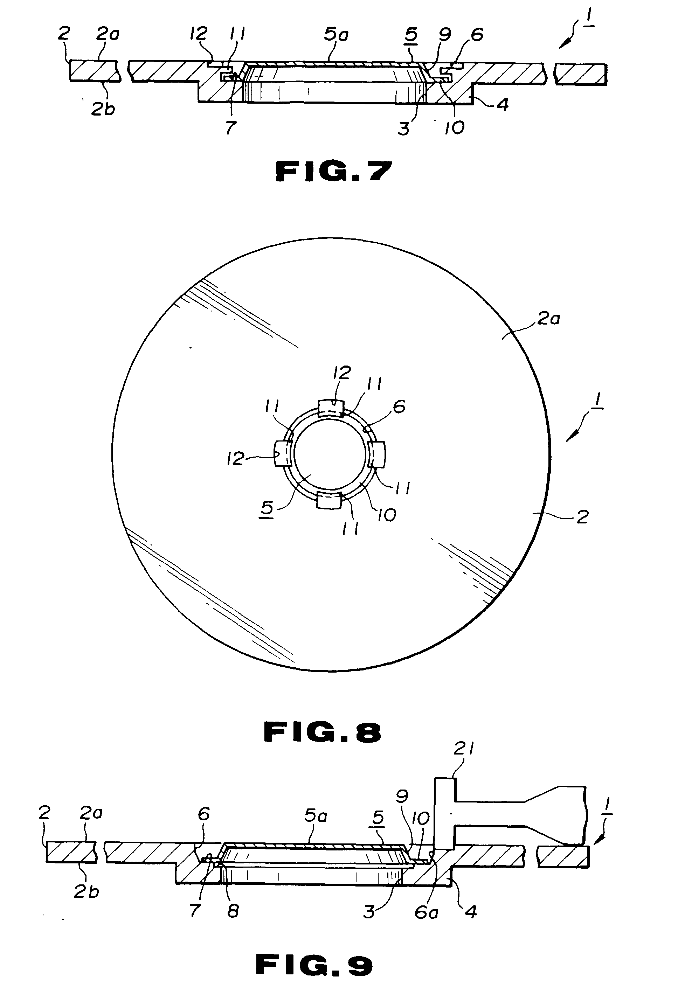

Since the projections 11 are formed in this manner, the metal plate 5 has its rim flange 10 supported by the projections 11, so that the metal plate 5 is fixed relative to the disc substrate 2 by being accommodated and supported within the recess 6, as shown in Figures 7 and 8.

Although four such projections 11 are shown at equiangular intervals on the rim of the recess 6 in Figure 8, it is only necessary for the metal plate 5 to be prevented from being dislocated from the inside of the recess 6 of the disc substrate 2 and it would suffice to provide two or more projections 11.

Alternatively, an annular projection may be formed on the entire circumference of the recess 6.

The projections 11 may be formed by applying a heated trowel or like heating means to desired portions of the rim of the recess 6.

A swaging method by ultrasonic waves may instead be employed for forming the projections 11. For forming the projections 11 by the swaging method, a contactor 21 of an ultrasonic welding device is engaged with the rim of the recess 6 thermally to deform portions of the rim of the recess 6 contacted by the contactor 21 to cause these portions to project into the recess 6, as shown in Figure 9.

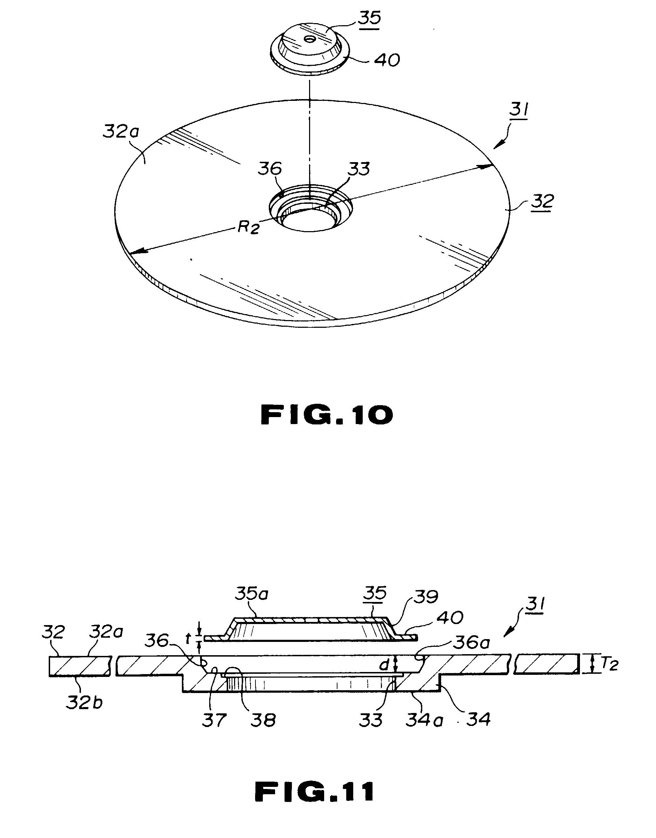

In a second embodiment of the invention shown in Figures 10 and 11, a magneto-optical disc 31 includes a disc substrate 32 formed by moulding a transparent synthetic resin material, such as polycarbonate resin. The disc substrate is in the form of a disc having a radius R₂ equal to about 64 mm and a thickness T₂ equal to about 1.2 mm.

The magneto-optical disc 31, including the disc substrate 32, has a signal recording part formed by depositing a signal recording layer on one major surface 32a of the disc substrate 32, with the opposite major surface 32b being a signal write/readout surface. A light beam is radiated on the signal recording layer from the write/read surface to record/reproduce information signals.

A central hole 33, engaged by a centreing member provided at the middle of a disc table of a disc rotating and driving device provided within recording/reproducing apparatus, extends through the centre of the disc substrate 32 of the magneto-optical disc 31. The central hole 33 is formed as a through-hole in the disc substrate 2 so that the centre thereof is coincident with a recording track(s) formed concentrically or spirally on the signal recording layer.

An annular protuberance 34 is formed at the centre of the opposite major surface 32b of the disc substrate 32 to encircle the central hole 33. The function of the protuberance 34 is to increase the depth of the central hole 33 in the thin disc substrate 32 to increase an amount of projection of the centreing member of the disc table into the central hole 33 to ensure correct alignment of the centre of rotation of the magneto-optical disc 31 with the axis of the disc table during loading of the magneto-optical disc 31 onto the disc table. The end face of the protuberance 34 also functions as a loading reference plane with respect to the disc table.

The protuberance 34 is formed in a non-recording radially inner region of the disc substrate 32 free of the signal recording layer, and projects by an amount substantially equal to the thickness T₂ of the disc substrate 32. Thus the portion of the disc substrate 32 formed with the protuberance 34 has a thickness which is twice that of the main body of the disc substrate 32.

An annular recess 36 to accommodate a magnetic metal plate 35 is formed around the central hole 33 on the major surface 32a of the disc substrate 32. The recess 36 has a diameter less than the outer diameter r of the protuberance 34 and a depth substantially equal to the thickness T₂ of the disc substrate 32. The recess 36 has a diameter larger at an open end 36a thereof than that at the bottom end thereof to facilitate insertion of the metal plate 35 into the recess 36.

The major surface 32a of the disc substrate 32 presents a planar surface except at the recess 36.

The bottom end of the recess 36, operating as a setting surface 37 for the metal plate 25, is formed with a step 38. The function of the step 38 is to prevent burrs or like projections from being formed on the setting surface 37 for the metal plate 35 and to maintain planarity of the setting surface 37.

The metal plate 35, accommodated in the recess 36, is formed by punching a metal sheet, such as a stainless steel sheet, e.g. SUS-430, having a thickness of about 0.4 mm, into the shape of a disc, as shown in Figure 10.

Referring to Figure 10, the metal plate 35 has the shape of a disc of a size that can be accommodated in the recess 36. The metal plate 35 has its outer peripheral part bent so that a major middle part 35a is flush with the major surface 32a of the disc substrate 32 and an inner peripheral wall of the open end 36a of the recess 36 is faced by the rim of the metal plate 35. That is, an outer rim flange 40 of the metal plate 35 is formed as a setting area for the setting surface 37 and merges with the major middle part 35a by means of a frusto-conical bent part 39. Thus the metal plate 5 is in the shape of a dished circular saucer, as shown in Figure 10.

The metal plate 35, formed as described above, is retained with respect to the disc substrate 32 by the following process and method.

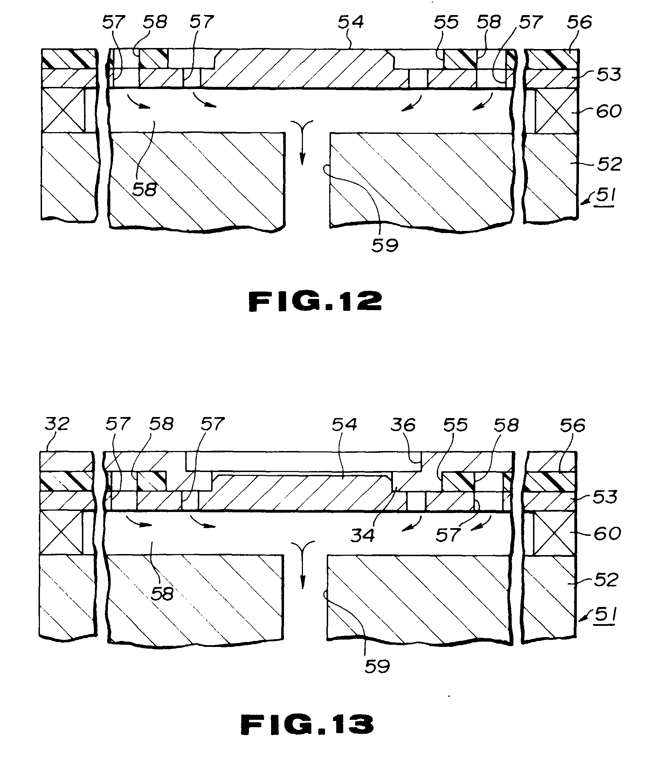

The disc substrate 32, formed as shown in Figures 10 and 11, is first set on a suction support table 51, Figure 12.

The suction support table 51, which can position and support the disc substrate 32 set thereon by suction, is provided with a substrate support table 53 to position and set the disc substrate 32 on the upper surface of a support table body 52, as shown in Figure 12. The support table 53 has a central projection 54 to be engaged in the central hole 33 of the disc substrate 32 and a recess 55 around the projection 54 which recess is to be engaged by the protuberance 34 of the disc substrate 32.

A soft protective sheet 56 of for example silicon rubber is bonded to a setting surface of the substrate support table 53 in contact with the major surface 32b of the disc substrate 32. The protective sheet 56 is provided to prevent damages to the major surface 32b of the disc substrate 32.

Suction means is provided to support the disc substrate 32 set on the substrate support table 53 by suction under vacuum by a vacuum pump, not shown, provided on the suction support table 51. The suction means includes a plurality of suction ports 57 formed in the substrate support table 53 and a plurality of spacers 60 interposed between the substrate support table 53 and the support table body 52 to define a suction air chamber 58 so that air contained in the suction air chamber 58 is drawn by a vacuum pump, not shown, via an air passage 59 formed in the support table body 52, to suck down onto and support the disc substrate 32 on the substrate support table 53.

The suction ports 57 are provided in the substrate support table 53 in register with an outer peripheral region and the central region of the disc substrate 32 placed thereon and within the recess 55 engaged with the protuberance 34. By providing the suction ports at these positions, the disc substrate 32 may be pressed and supported substantially uniformly over its entire surface against the substrate support table 53.

Meanwhile, ports communicating with these suction ports 57 are formed in the protective sheet 56 in register with the suction ports 57.

Referring to Figure 13, the disc substrate 32 is placed on the suction support table 51 so that the recess 36 in the metal plate 35 is directed upwards. The disc substrate 32 is loaded with the central hole 33 engaged by the projection 54 and with the protuberance 34 engaged in the recess 55 so as to be positioned with respect to the suction support table 51.

With the disc substrate 32 thus set on the suction support table 51, the vacuum pump is set into operation to suck out the air contained in the suction chamber 58 via the air passage 58. At this time, the air contained between the disc substrate 32 and the suction support table 51 is sucked via the suction ports 57 so that the disc substrate 32 is tightly supported against the protective sheet 56 on the suction support table 51.

Since the disc substrate 32 is supported at this time on the suction support table 56 with the central hole 33 engaged by the projection 54 and with the protuberance 34 engaged in the recess 55, the disc substrate 32 is loaded in position on the suction support table 56.

After the disc substrate 32 is loaded in this manner on the suction support table 51, the metal plate 35 is accommodated in the recess 36 with the rim flange 40 forming the setting area thereof set on the setting surface 37 of the recess 36.

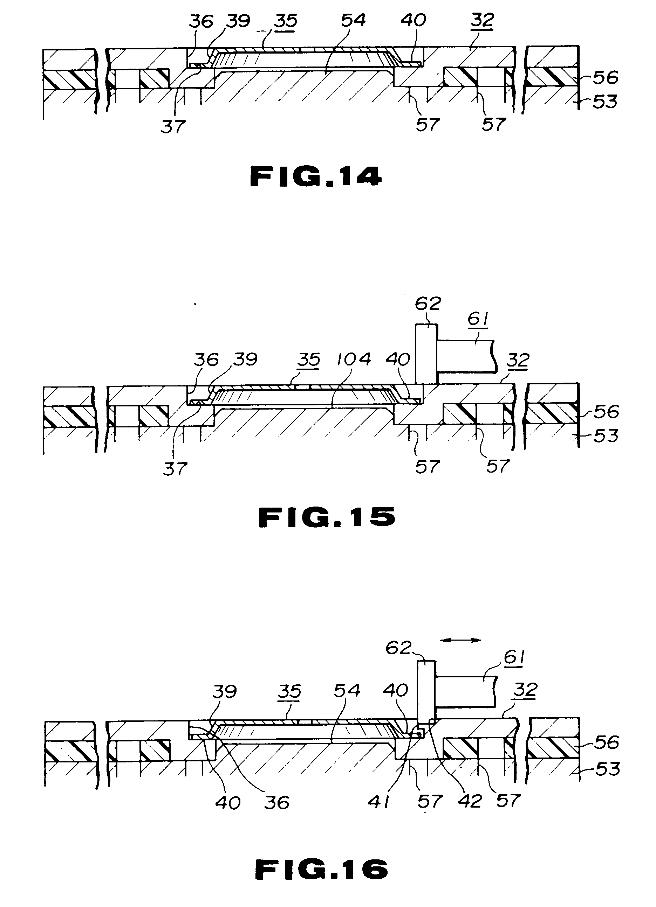

After the metal plate 35 is placed within the recess 36, a vibrator 62 as a resonator of an ultrasonic wave application device 61 has its tip placed in contact with the rim of the recess 36 to impress ultrasonic waves having a plane of oscillation in a direction parallel to the major surface of the disc substrate 32, as shown in Figure 15. It should be noted that, during application of ultrasonic oscillations to the disc substrate 32, the ultrasonic vibrator 62 is pressed with a predetermined pressure against the disc substrate 32.

When the ultrasonic vibrations are applied in this manner, the rim part of the recess 36 in contact with the vibrator 62 is heated and softened. Since the vibrator 62 is pressed with a predetermined pressure from above, a recessed area 42 corresponding in size to the vibrator 62 is formed around the rim of the recess 36 and correspondingly a lug 41 is formed which projects towards the inner region of the recess 36. As shown in Figure 16, the lug 41 protrudes above the rim flange 40 of the metal plate 35 placed in the recess 36 and supports the rim flange 40.

Since the ultrasonic vibrations are applied to the disc substrate 32 in a direction parallel to the major surface 32a of the disc substrate 32, the ultrasonic vibrations are transmitted in a direction parallel to the major surface 32a of the disc substrate 32, so that the portions of the disc substrate 32 softened by being contacted with the vibrator of the disc substrate 32 is displaced in a direction parallel to the major surface 32a along which the ultrasonic vibrations are transmitted. The result is that the lugs 41 formed on the rim of the recess 36 protrude positively towards the inner region of the recess 36 and overlie the rim flange 40 of the metal plate 35.

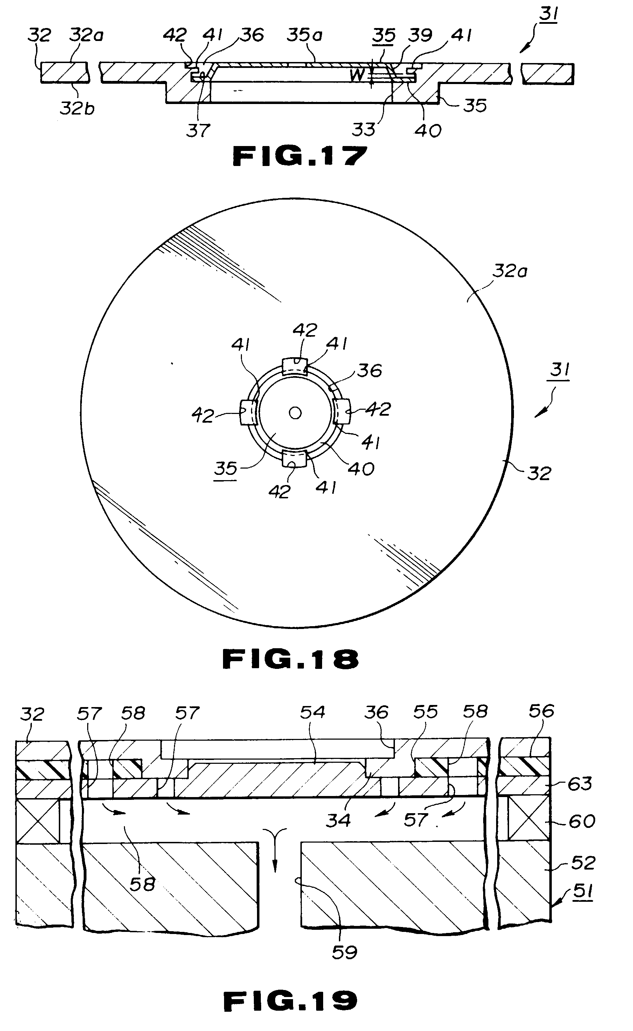

Preferably, the ultrasonic vibrations applied to the disc substrate 32 are produced in a direction parallel to the major surface 32a of the disc substrate 32, so that only small vibrations are transmitted along the thickness of the disc substrate 32. The result is that heating of the disc substrate in a direction along its thickness is limited to inhibit deformation of the recess 36 in the same direction. In this manner, each of the lugs 41 which extends towards the inner region of the recess 36 may have a controlled thickness to enable the lug 41 to support the rim flange 40 of the metal plate 35 without making contact with the rim flange 40. That is, by setting the depth d of the recess 36 so as to be larger than the thickness of the metal plate 35, a gap w may be left between the lug 41 and the rim flange 40, as shown in Figure 17, so as loosely to accommodate and hold the metal plate 35 within the recess 36.

By loosely fitting and supporting the metal plate 35 in the recess 36 in this manner, it becomes possible to prevent the metal plate 35 from being fixed with a tilt relative to the major surface of the disc substrate 32 as well as to prevent the disc substrate 35 of synthetic resin from being deformed due to differences in thermal expansion coefficient between the metal plate 35 and the disc substrate 32.

By providing the lugs 41, formed by applying ultrasonic vibrations in a direction parallel to the major surface 32a of the disc substrate 32, at a plurality of positions, such as four positions, symmetrically on the rim of the recess 36, the metal plate 35 accommodated within the recess 36 may be supported by the lugs 41 and thereby retained by the disc substrate 2.

By simultaneously contacting oscillators 62 on the rim of the recess 36, a plurality of lugs 41 may be formed at the same time.

It is noted that the size of the oscillator 62 contacted with the rim of the recess 36 for forming the lug 41 is set by the desired size of the lug 4.

The ultrasonic vibrations to be applied to the disc substrate 32 of a polycarbonate resin, are preferably within the range 15 to 50 kHz. If the oscillation frequency is not more than 15 kHz, sufficient heating may not be achieved, whereas, if the oscillation frequency is over 50 kHz, the degree of softening of the portions of the disc substrate to be contacted with the oscillator 62 and thereby softened is difficult to control because of excessive heating. The ultrasonic vibrations are preferably at about 20 kHz.

Although four of the lugs 41 are shown formed symmetrically at equiangular intervals on the rim of the recess 36 in Figure 18, it is only necessary that the metal plate 35 be supported by the disc substrate 31 so as not to be detached from the recess 36, so that it suffices to provide two or more lugs at appropriate positions on the rim of the recess 36.

The metal plate 35 held by the disc substrate 32 may be in the form of a flat disc of a size to be accommodated within the recess 36, instead of being dished so as to have the rim flange 40.

In a third embodiment of the invention hereinafter described parts or components similar to those of the preceding embodiments are denoted by the same reference numerals and detailed description therefor is omitted for simplicity.

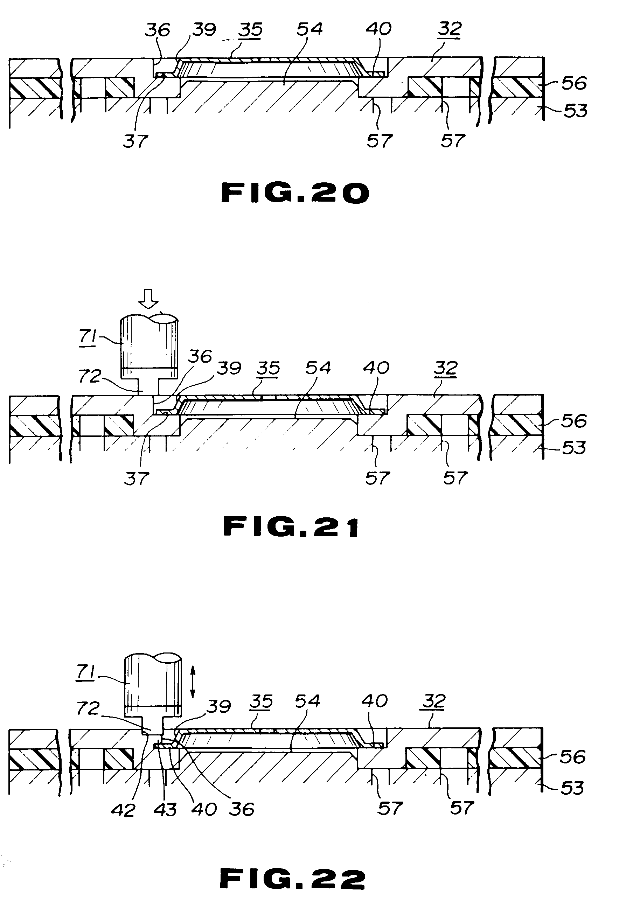

After loading the disc substrate 32 on the suction support table 51, as shown in Figure 19, the metal plate 35 is placed within the recess 36. At this time, the metal plate 35 is placed in the recess 3 with the rim flange 40 thereof resting on the setting surface 37 of the recess 36, as shown in Figure 20.

After the metal plate 35 has been placed within the recess 36, an oscillator 72, operating as a resonator of an ultrasonic vibrator 71, has its tip contacted with the rim of the recess 36, as shown in Figure 21, and ultrasonic vibrations are applied in a direction perpendicular to the major surface of the disc substrate 32. It is noted that, when the ultrasonic vibrations are applied to the disc substrate 32, the oscillator 72 is pressed against the disc substrate 32 with a determined pressure.

By application of the ultrasonic vibrations in this manner, the rim portions of the recess 36 contacted by the oscillator 72 are heated and softened. Since the oscillator 72 is pressed at this time with a predetermined pressure, a recessed area 42 of a size corresponding to that of the oscillator 72 is formed in the rim part of the recess 36, and correspondingly, a lug 43 is formed which projects into the inside of the recess 36. As shown in Figure 22, the lug 43 protrudes above the rim flange 40 of the metal plate 35 to support the rim flange 40.

Since the ultrasonic vibrations applied to the disc substrate 32 are produced in a direction perpendicular to the major surface of the disc substrate 32, the vibrations are propagated in a direction along the thickness of the disc substrate 32. Conversely, only small vibrations are propagated in a direction along the major surface 32a of the disc substrate 32. The result is that the disc substrate 32 is softened mainly in the direction along the depth of the portions thereof contacted with the oscillator 72, while softening thereof in the direction along the major surface 32a is restricted. In this manner, the lug 43 may be formed with a size corresponding to the size of the vibrator 72.

By providing the lugs 43, formed by applying ultrasonic vibrations in a direction perpendicular to the major surface 32a of the disc substrate 32, at a plurality of positions, such as four positions, symmetrically on the rim of the recess 36, the metal plate 35 accommodated within the recess 36 may be supported by the lugs 43 and thereby retained by the disc substrate 32.

It is noted that the size of the oscillator 72 contacted with the rim of the recess 36 for forming the lugs 43 is set by the desired size of the lug 43.

The ultrasonic vibrations to be applied to the disc substrate 32 of a polycarbonate resin, are preferably within the range of 15 to 40 kHz. If the oscillation frequency is less than 15 kHz, sufficient heating may not be achieved, whereas, if the oscillation frequency is higher than 40 kHz, the degree of softening of the portions of the disc substrate to be contacted with the oscillator 72 and thereby softened is difficult to control because of excessive heating. The ultrasonic vibrations are preferably about 20 kHz.

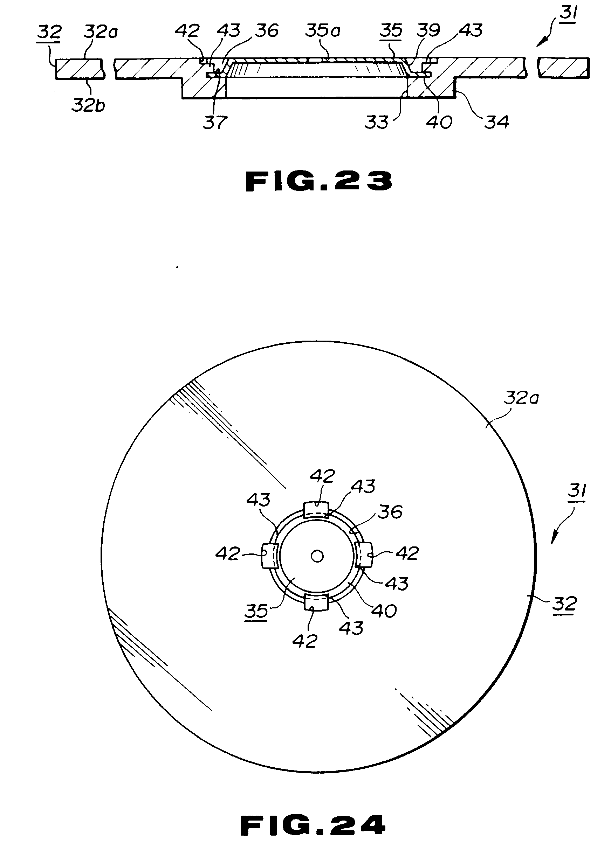

Although four of the lugs 41 are shown formed symmetrically at equiangular intervals on the rim of the recess 36 in Figure 24, it is only necessary that the metal plate 35 be supported by the disc substrate 31 without being detached from the recess 36, so that it suffices to provide two or more lugs at appropriate positions on the rim of the recess 36.

A single annular lug 43 may also be provided around the entire circumference of the recess 36, in which case the oscillator 72 is in the form of a ring corresponding to the rim of the recess 36.

The metal plate 35 held by the disc substrate 32 may be in the form of a flat disc of a size to be accommodated within the recess 36, instead of being dished so as to have the rim flange 40 as in the present embodiment.

In addition, although the disc is a magneto-optical disc in the above-described embodiments, the invention may be applied to a disc for recording information signals which is provided with a disc substrate of synthetic resin and a magnetic plate for magnetically chucking the disc.

## Claims

1. An optical disc comprising
a disc substrate (2, 32) having a central hole (3, 33) and a recess (6, 36) in a first major surface (2a, 32a) thereof, the recess (6, 36) having a rim and having its centre substantially coaxial with the centre of the central hole (3, 33); and
a magnetic member (5, 35) engaged in the recess (6, 36) in the disc substrate,
characterised in that one or more lugs (11, 41, 43) protrude from said first major surface (2a, 32a) of the disc substrate (2, 32) into the recess (6, 36) and overlie a part of the magnetic member (5, 35), the or each of said lugs being formed by thermal deformation of a part of the rim of the recess (6, 36).

2. An optical disc according to claim 1, comprising
a protuberance (4, 34) on a second major surface (2b, 32b) of the disc substrate (2, 32), surrounding the central hole (3, 33).

3. An optical disc according to claim 1 or claim 2, wherein
the magnetic member (5, 35) comprises a major middle part (5a, 35a) and a rim flange (10, 40) at the outer periphery, the rim flange (10, 40) being parallel to the major middle part (5a, 35a) and connected thereto by a frusto-conical part (9, 39), the magnetic member (5, 35) being placed within the recess (6, 36), and
said one or more lugs (11, 41, 43) protrude into the recess (6, 36) to overlie a part of rim flange (10, 40).

4. An optical disc according to any one of claims 1 to 3, wherein the recess (6, 36) is formed with a step (8, 38) connecting to said first major surface (2a, 32a) of the disc substrate (2, 32).

5. An optical disc according to any one of claims 1 to 3, wherein the distance between the bottom of the recess (6, 36) and the lugs (11, 41, 43) is selected to be larger than the thickness of an outer rim part (10, 40) of the magnetic member (5, 35).

6. An optical disc according to claim 5, wherein the magnetic member (5, 35) is in the form of a disc of a diameter less than the inner diameter of the recess (6, 36).

7. A method of holding a magnetic member (5, 35) to a disc substrate (2, 32) exhibiting light transmitting properties and having a central hole (3, 33) and a recess (6, 36) in one major surface (2a, 32a) thereof, the recess (6, 36) having a rim and having it's centre substantially coaxial with the centre of said central hole (3, 33), characterised by engaging the magnetic member (5, 35) in the recess (6, 36) of the disc substrate (2, 32), and
applying, with the magnetic member (6, 36) engaged in the recess, ultrasonic vibrations to parts of the rim of the recess (6, 36) of the disc substrate (2, 32) by ultrasonic wave generating means (21, 62), while the ultrasonic wave generating means (21, 62) is pressed against the disc substrate, thereby thermally to deform the parts of the rim of the recess of the disc substrate to hold the magnetic member (5, 35) to the disc substrate.

8. A method of holding a magnetic member (5, 35) to a disc substrate (2, 32) according to claim 7, wherein means (51 to 60) are employed to hold the disc substrate (2, 32) in a positioned state.

9. A method according to claim 7 or claim 8, wherein the ultrasonic vibrations generated by the ultrasonic wave generating means (21, 62) are vibrations having the plane of vibration in a direction parallel to the major surfaces (2a, 32a) of the disc substrate (2, 32).

10. A method according to claim 7 or claim 8, wherein the ultrasonic vibrations generated by the ultrasonic wave generating means (21, 62) are vibrations having the plane of vibration in a direction perpendicular to the major surfaces (2a, 32a, 26, 32b) of the disc substrate (2, 32).

11. A method according to claim 7 or claim 8, wherein the ultrasonic vibrations by the ultrasonic vibrator is in the range of from 15 to 50 kHz.

## Patentansprüche

1. Optische Platte, welche umfaßt:
ein Plattensubstrat (3, 32) mit einer zentralen Bohrung (3, 33) und einer Aussparung (6, 36) in einer ersten Hauptoberfläche (2a, 32a), wobei die Aussparung (6, 36) einen Rand besitzt und ihr Mittelpunkt im wesentlichen koaxial zu dem Mittelpunkt der zentralen Bohrung (3, 33) liegt; und
ein magnetisches Teil (5, 35), welches in Eingriff mit der Aussparung (6, 36) in dem Plattensubstrat steht,
dadurch gekennzeichnet,
daß eine oder mehrere Ansätze (11, 41, 43) von der ersten Hauptoberfläche (2a, 32a) des Plattensubstrats (2, 32) in die Aussparung (6, 36) vorspringen und über einem Teil des magnetischen Teils (5, 35) liegen, wobei der Ansatz oder jeder der Ansätze mittels thermischer Verformung eines Teils des Randes der Aussparung (6, 36) ausgebildet ist.

2. Optische Platte nach Anspruch 1, welche umfaßt:
eine Erhebung (4, 34) auf einer zweiten Hauptoberfläche (2b, 32b) des Plattensubstrats (2, 32), welche die zentrale Bohrung (3, 33) umschließt.

3. Optische Platte nach Anspruch 1 oder 2,
bei welcher das magnetische Teil (5, 35) ein Hauptmittelteil (5a, 35a) und einen Randflansch (10, 40) an dem äußeren Umfang umfaßt, wobei der Randflansch (10, 40) parallel zu dem Hauptmittelteil (5a, 35a) verläuft und mit diesem durch ein kegelstumpfförmiges Teil (9,39) verbunden ist, wobei das magnetische Teil (5, 35) in der Aussparung (6, 36) plaziert ist; und
bei welcher ein oder mehrere Ansätze (11, 41, 43) in die Aussparung (6, 36) vorspringen, um einen Teil des Randflansches zu überlagern.

4. Optische Platte nach einem der Ansprüche 1 bis 3, bei welcher die Aussparung (6, 36) mit einem Stützlager (8, 38) ausgebildet ist, das mit der ersten Hauptoberfläche (2a, 32a) des Plattensubstrats (2,32) verbunden ist.

5. Optische Platte nach einem der Ansprüche 1 bis 3, bei welcher der Abstand zwischen dem Boden der Aussparung (6, 36) und den Ansätzen (11, 41, 43) ausgewählt ist, um größer als die Dicke eines äußeren Randteils (10, 40) des magnetischen Teils (5, 35) zu sein.

6. Optische Platte nach Anspruch 5, bei welcher das magnetische Teil (5, 35) die Form einer Platte mit einem Durchmesser, welcher kleiner als der innere Durchmesser der Aussparung ist, besitzt.

7. Verfahren zum Halten eines magnetischen Teils (5, 35) auf einem Plattensubstrat (2, 32), welches lichtübertragende Eigenschaften zeigt und eine zentrale Bohrung (3, 33) und eine Aussparung (6, 36) in einer Hauptoberfläche (2a, 32a) besitzt, wobei die Aussparung (6, 36) einen Rand aufweist und wobei ihr Mittelpunkt im wesentlichen koaxial zum Mittelpunkt der zentralen Bohrung (3, 33) liegt,
gekennzeichnet durch das Eingreifen des magnetischen Teils (5, 35) in die Aussparung (6, 36) des Plattensubstrats (2, 32) und
Anlegen von Ultraschallschwingungen mit dem in die Aussparung eingreifenden magnetischen Teil (6, 36) auf Teile des Randes der Aussparung (6, 36) des Plattensubstrats (2, 32) mittels einer Ultraschallwellen-Erzeugungseinrichtung (21, 62), während die Ultraschallwellen-Erzeugungseinrichtung (21, 62) gegen das Plattensubstrat gepreßt wird, um dadurch die Teile des Randes der Aussparung des Plattensubstrats thermisch zu verformen, um das magnetische Teil (5, 35) auf dem Platensubstrat zu halten.

8. Verfahren zum Halten eines magnetischen Teils (5, 35) auf einem Plattensubstrat (2, 32) nach Anspruch 7, bei welchem Mittel (51 bis 60) angewendet werden, um das Plattensubstrat (2, 32) in einem positionierten Zustand zu halten.

9. Verfahren nach Anspruch 7 oder 8, bei welchem die durch die Ultraschallwellen-Erzeugungseinrichtung (21, 62) erzeugten Schallschwingungen Schwingungen sind, deren Schwingungsebene in einer Richtung parallel zu den Hauptoberflächen (2a, 32a) des Plattensubstrats (2, 32) verläuft.

10. Verfahren nach Anspruch 7 oder 8, bei welchem die durch die Ultraschallwellen-Erzeugungseinrichtung (21, 62) erzeugten Schallschwingungen Schwingungen sind, deren Schwingungsebene in einer Richtung senkrecht zu den Hauptoberflächen (2a, 32a, 26, 32b) des Plattensubstrats (2, 32) verläuft.

11. Verfahren nach Anspruch 7 oder 8, bei welchem die Ultraschallschwingungen des Ultraschall-Schwingungserzeugers im Bereich von 15 bis 50 kHz liegen.

## Revendications

1. Disque optique comprenant :
- un support de disque (2, 32) possédant un trou central (3, 33) et un creux (6, 36) dans une première surface principale (2a, 32a), le creux (6, 36) possédant un rebord et un centre pratiquement coaxial au centre du trou central (3, 33); et
- une pièce magnétique (5, 35) coopérant avec le creux (6, 36) dans le support de disque;
disque caractérisé en ce qu'une ou plusieurs languettes (11, 41, 43) dépasse de ladite première surface principale (2a, 32a) du support de disque (2, 32) dans le creux (6, 36) et chevauchent une partie de la pièce magnétique (5, 35), la ou chacune desdites languettes étant formée par déformation thermique d'une partie du rebord du creux (6, 36).

2. Disque optique selon la revendication 1, comprenant une protubérance (4, 34) sur une seconde surface principale (2b, 32b) du support de disque (2, 32) entourant le trou central (3, 33).

3. Disque optique selon la revendication 1 ou 2, dans lequel la pièce magnétique (5, 35) comprend une partie médiane principale (5a, 35a) et un rebord de flasque (10, 40) sur sa périphérie externe, le rebord de flasque (10, 40) étant parallèle à la partie médiane principale (5a, 35a) et raccordé selon une partie tronconique (9, 39), la pièce magnétique (5, 35) étant placée dans le creux (6, 36), et ladite une ou lesdites languettes (11, 41, 43) dépasse dans le creux (6, 36) pour chevaucher une partie du rebord de flasque (10, 40).

4. Disque optique selon l'une quelconque des revendications 1 à 3, dans lequel le creux (6, 36) est formé d'un étagement (8, 38) se raccordant à ladite première surface principale (2a, 32a) du support de disque (2, 32).

5. Disque optique selon l'une quelconque des revendications 1 à 3, dans lequel la distance entre le fond du creux (6, 36) et les languettes (11, 41, 43) est sélectionnée comme étant supérieure à l'épaisseur d'une partie de rebord externe (10, 40) de la pièce magnétique (5, 35).

6. Disque optique selon la revendication 5, dans lequel la pièce magnétique (5, 35) a la forme d'un disque d'un diamètre inférieur au diamètre interne du creux (6, 36).

7. Procédé de maintien d'une pièce magnétique (5, 35) sur un support de disque (2, 32) présentant des propriétés de transmission de la lumière et possédant un trou central (3, 33) et un creux (6, 36) sur une première surface principale (2a, 32a), le creux (6, 36) possédant un rebord et un centre pratiquement coaxial à celui dudit trou central (3, 33), procédé caractérisé par l'engagement de la pièce magnétique (5, 35) dans le creux (6, 36) du support de disque (2, 32), et par l'application, la pièce magnétique (6, 36) étant étagée dans le creux (6, 36) de vibrations à ultrasons sur des parties du rebord du creux (6, 36) du support de disque (2, 32) à l'aide d'un moyen de génération d'ondes à ultrasons (21, 62) tandis que le moyen de génération d'ondes à ultrasons (21, 62) est pressé contre le support de disque, déformant ainsi, de façon thermique, les parties du rebord du creux du support de disque afin de maintenir la pièce magnétique (5, 35) sur le support de disque.

8. Procédé de maintien d'une pièce magnétique (5, 35) sur un support de disque (2, 32) selon la revendication 7, selon lequel des moyens (51 à 60) sont utilisés pour maintenir le support de disque (2, 32) en position.

9. Procédé selon la revendication 7 ou 8, selon lequel les vibrations à ultrasons générées par le moyen de génération d'ondes à ultrasons (21, 62) sont des vibrations dont le plan est parallèle à la première surface principale (2a, 32a) du support de disque (2, 32).

10. Procédé selon la revendication 7 ou 8, selon lequel les vibrations à ultrasons générées par le moyen de génération d'ondes à ultrasons (21, 62) sont des vibrations dont le plan se trouve dans une direction normale aux surfaces principales (2a, 32a, 26, 32b) du support de disque (2, 32).

11. Procédé selon la revendication 7 ou 8, selon lequel les vibrations à ultrasons produites par le vibreur à ultrasons sont comprises entre 15 et 50 kHz.
